(19) Europäisches Patentamt
European Patent Office
Office européen des brevets

(11) Veröffentlichungsnummer: **0 077 415**
**B1**

# (12) EUROPÄISCHE PATENTSCHRIFT

(45) Veröffentlichungstag der Patentschrift: **02.04.86**

(51) Int. Cl.⁴: **C 08 L 69/00**

(21) Anmeldenummer: **81108608.1**

(22) Anmeldetag: **21.10.81**

(54) **Mischungen von Polycarbonatelastomeren mit einkondensierten hydrierten Dimerfettsäureestern mit Polyolefinen und gegebenenfalls anderen Polycarbonaten.**

(43) Veröffentlichungstag der Anmeldung: **27.04.83 Patentblatt 83/17**

(45) Bekanntmachung des Hinweises auf die Patenterteilung: **02.04.86 Patentblatt 86/14**

(84) Benannte Vertragsstaaten: **DE FR GB IT NL SE**

(56) Entgegenhaltungen:
**EP - A - 0 024 672**
**EP - A - 0 028 753**

(73) Patentinhaber: **BAYER AG, Konzernverwaltung RP Patentabteilung, D-5090 Leverkusen 1 Bayerwerk (DE)**

(72) Erfinder: **Schreckenberg, Manfred, Dr., Bärenstrasse 14, D-4150 Krefeld (DE)**
Erfinder: **Nouvertné, Werner, Dr., Scheiblerstrasse 95, D-4150 Krefeld (DE)**
Erfinder: **Medem, Harald, Dr., Scheiblerstrasse 85, D-4150 Krefeld (DE)**
Erfinder: **Dhein, Rolf, Dr., Deswatinesstrasse 30, D-4150 Krefeld (DE)**
Erfinder: **Müller, Peter Rolf, Dr., Paul-Klee-Strasse 76, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Aus der deutschen Offenlegungsschrift 2 935 317 (Le A 19 828) sind Polycarbonat-elastomere mit einkondensierten hydrierten Dimerfettsäureestern bekannt; dort wird auch bereits ausgeführt, dass derartige Polycarbonate mit anderen Polycarbonatelastomeren oder mit anderen Thermoplasten, wie beispielsweise Bisphenol-A-Polycarbonaten abgemischt werden können.

Aus der europäischen Offenlegungsschrift 4020 (Le A 18 725) sind Abmischungen von thermoplastischen Polycarbonaten mit Polyestercarbonaten und/oder Polyethercarbonaten bekannt.

Bekannt sind auch Abmischungen von thermoplastischen Polycarbonaten mit Polyolefinen wie Polyethylen, Polypropylen oder Polyisobutylen (US-Patent 3 442 224). Gemäss US-Patent 3 813 358 werden derartige Mischungen noch durch den Zusatz einer dritten Komponente modifiziert, welche ein Pfropfpolymerisat auf Polybutadien darstellt.

Gegenstand der vorliegenden Erfindung sind Mischungen aus

a) hochmolekularen, segmentierten, thermoplastisch verarbeitbaren, aromatischen Polycarbonaten mit 5 bis 70 Gew.-%, vorzugsweise 20 bis 65 Gew.-% einkondensierten hydrierten Dimerfettsäureestern, und gegebenenfalls

b) anderen hochmolekularen, aromatischen, thermoplastischen Polycarbonaten, dadurch gekennzeichnet, dass sie

c) thermoplastische Polyolefine, insbesondere Polyethylen enthalten.

In den erfindungsgemässen Mischungen liegen die Summe der Komponenten a) + b) in Gewichtsmengen von 98 Gew.-% bis 90 Gew.-%, vorzugsweise 97 Gew.-% bis 94 Gew.-%, und die Komponente c) in Gewichtsmengen von 2 bis 10 Gew.-%, vorzugsweise von 3 bis 6 Gew.-%, bezogen jeweils auf die gesamte Gewichtsmenge aus a) + b) + c), welche jeweils 100 Gew.-% ausmacht.

In der Summe der Komponenten a) + b) wiederum sind die einkondensierten, hydrierten Dimerfettsäureesterreste in Gewichtsmengen von 3 bis 30 Gew.-%, vorzugsweise 5 Gew.-% bis 20 Gew.-% enthalten. Unter diesen Voraussetzungen ist das Gewichtsverhältnis der Komponenten a):b) weitgehend variabel; die Komponente b) kann von 0 bis 67 Gew.-%, bezogen auf die Summe aus a)+b) vorliegen.

Hochmolekulare, thermoplastische, aromatische Polycarbonate gemäss erfindungsgemässer Komponente b) sind die nach bekannten Verfahren (sh. beispielsweise Schnell, Chemistry and Physics of Polycarbonates, Intenscience Publishers, 1964) durch Mischungen von Diphenolen, insbesondere Dihydroxydiarylalkanen mit Phosgen oder Diestern der Kohlensäure erhältlichen Polykondensate in Betracht, wobei ausser den unsubstituierten Dihydroxydiarylalkanen auch solche geeignet sind, deren Arylreste in o- und/oder m-Stellung zur Hydroxylgruppe Methylgruppe oder Halogenatome tragen. Ebenso sind verzweigte Polycarbonate geeignet (sh. beispielsweise DE-PS 2 500 092 (Le A 16 142)).

Diese Polycarbonate haben mittlere Gewichtsmittel Molekulargewichte $\bar{M}w$ zwischen 10 000 und 100 000, vorzugsweise zwischen 20 000 und 40 000, ermittelt durch Messungen der rel. Viskosität in $CH_2Cl_2$ bei 25°C und einer Konzentration von 0,5 Gew.-%.

Geeignete Diphenole sind z.B. Hydrochinon, Resorcin, 4,4'-Dihydroxydiphenyl, Bis-(hydroxyphenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner α, α'-Bis-(hydroxyphenyl)-diisopropylbenzol sowie die entsprechenden kernalkylierten bzw. kernhalogenierten Verbindungen.

Bevorzugte Polycarbonate gemäss Komponente b) sind solche, die an wiederkehrenden bifunktionellen Struktureinheiten (ausser gegebenenfalls den üblichen monofunktionellen und eventuell den üblichen tri- oder mehr als trifunktionellen Strukturelementen) nur solche der folgenden Formel (I) enthalten:

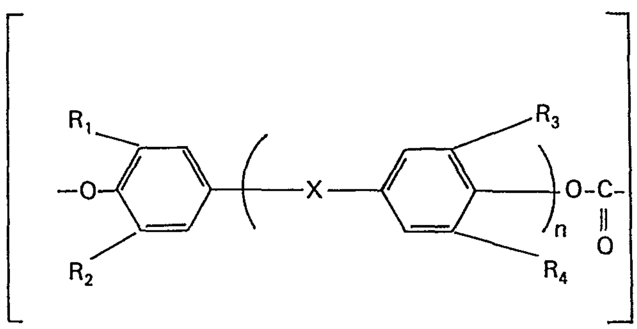

(I)

worin

X $C_1$-$C_5$-Alkylen, $C_2$-$C_5$-Alkyliden, $C_6$-Cycloalkylen, $C_6$-Cycloalkyliden, eine Einfachbindung, O, S oder $SO_2$ ist, $R_1$ bis $R_4$ gleich oder verschieden und H, Cl, Br, $CH_3$ oder $C_2H_5$ sind und n 0 oder 1 ist.

Insbesondere bevorzugt sind Polycarbonate auf Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A) und Bis-(4-hydroxy-phenyl)-cyclohexan-1,1 (Bisphenol Z).

Weitere Informationen über aromatische Polycarbonate und deren Herstellung und Verwendung sind beispielsweise in den US-Patenten 3 028 365, 3 275 601 und 3 062 781 beschrieben.

Erfindungsgemäss geeignete Polyolefine (Komponente c) sind Polymere von aliphatischen ungesättigten Kohlenwasserstoffen, wie beispielsweise Ethylen, Propylen, Butylen oder Isobutylen, die nach üblichen Verfahren z.B. Radikalpolymerisation erhalten werden und mittlere Gewichtsmittel-Molekulargewichte $\bar{M}w$ (gemessen nach gelchromatographischen Methoden) zwischen 5000 und 3 000 000 haben. Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat, Acrylsäure oder Acrylsäureester in bekannter Weise copolymerisiert sein, wobei der Anteil an Vinylmonomeren maximal 30 Gew.-%, vorzugsweise bis 25 Gew.-% beträgt.

Hochmolekulare segmentierte thermoplastisch bearbeitbare aromatische Polycarbonate mit einkondensierten hydrierten Dimerfettsäureestern die erfindungsgemäss als Komponente a) geeignet sind, sowie deren Herstellung sind in der deutschen Offenlegungsschrift 2 935 517 (Le A 19 828) beschrieben.

Sie haben mittlere Molekulargewichte $\bar{M}w$ (Gewichtsmittel) von 25 000 bis 200 000, vorzugsweise von 40 000 bis 150 000, ermittelt nach der Lichtstreumethode mit dem Streulichtphotometer. Die relativen Lösungsviskositäten $\eta_{rel}$ (gemessen an Lösungen von 0,5 g in 100 ml $CH_2Cl_2$ bei 25°C) liegen zwischen 1, 2 und 3, vorzugsweise zwischen 1,25 und 3.

Diese Produkte sind vorzugsweise erhältlich durch Umsetzung von hydrierten Dimerfettsäureestern mit Hydroxyarylcarbonatendgruppen der Formel (II)

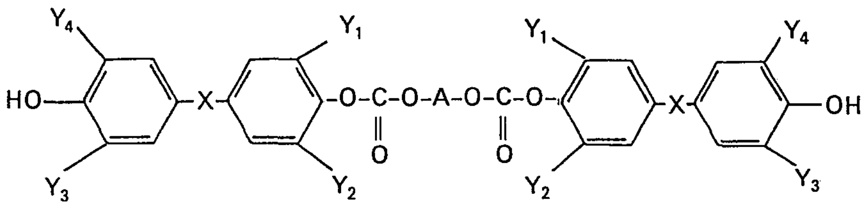

(II)

worin

-O-A-O- der bivalente Diolat-Rest von aliphatisch Hydroxy-terminierten hydrierten Dimerfettsäureestern mit $\bar{M}n$ (Zahlenmittel des Molekulargewichts) von 800 bis 20 000, vorzugsweise von 1000 bis 15 000 und insbesondere von 2000 bis 10 000 ist,

X eine Einfachbindung, $-CH_2-$,

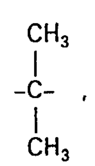 , 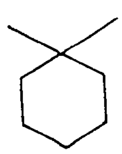 -O-, -S-, $-SO_2-$,

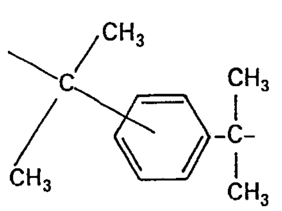

ist und

$Y_1$ bis $Y_4$ gleich oder verschieden sind, und Wasserstoff, $C_1$-$C_4$-Alkyl, vorzugsweise Methyl oder Halogen, vorzugsweise Chlor oder Brom, bedeuten, mit anderen Diphenolen, Kettenabbrechern und Kohlensäurehalogeniden und gegebenenfalls Verzweigern nach dem bekannten Verfahren der Phasengrenzflächenpolykondensation, wobei diese Produkte zwischen 5 und 70 Gew.-%, vorzugsweise zwischen 20 und 65 Gew.-%, an einkondensierten, hydrierten Dimerfettsäureestern und zwischen 95 unf 30 Gew.-%, vorzugsweise zwischen 80 und 35 Gew.-%, an aromatischen Carbonatstruktureinheiten auf Basis der anderen Diphenole enthalten.

Geeignete andere Diphenole sind beispielsweise

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-sulfoxide
Bis-(hydroxyphenyl)-sulfone und
α,α-Bis-(hydroxyphenyl)-diisopropylbenzole

sowie deren kernalkylierte und kernhalogenierte Verbindungen. Diese und weitere geeignete Diphenole sind z.B. in den US-Patentschriften 3 271 367 und 2 999 846 und in den deutschen Offenlegungsschriften 2 063 050, 2 211 957 aufgeführt.

Geeignete andere Diphenole sind insbesondere solche der Formel (III)

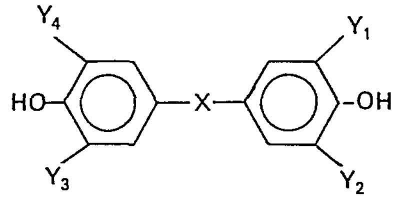 (III),

worin

X eine Einfachbindung $-CH_2-$,

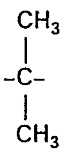 , 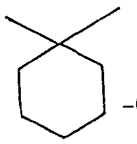 $-O-$, $-S-$, $-SO_2-$

oder 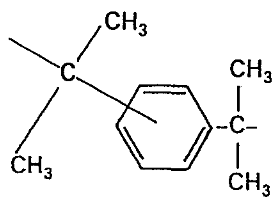 bedeutet und

$Y_1$ bis $Y_4$ gleich oder verschieden sind, und Wasserstoff, $C_1$–$C_4$-Alkyl, vorzugsweise Methyl, oder Halogen, vorzugsweise Chlor oder Brom bedeuten.

Geeignete andere Diphenole sind beispielsweise

4,4′-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-Dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α′-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Bevorzugte andere Diphenole sind beispielsweise

2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Die geeigneten Diphenole können sowohl allein als auch zu mehreren eingesetzt werden.

Geeigneter Verzweiger sind solche mit drei oder mehr als drei funktionellen Gruppen, insbesondere solche mit drei oder mehr als drei phenolischen Hydroxylgruppen, wobei die üblicherweise bekannten Mengen an Verzweiger zwischen 0,05 und 2 Mol-%, bezogen auf eingebaute Diphenole, einzuhalten sind. Die Herstellung verzweigter Polycarbonate ist beispielsweise in den DT-OS 1 570 533 und DT-OS 1 595 762 sowie in dem US-PS 3 544 514 bzw. US-RE 27682 beschrieben.

Als Kettenabbrecher sind die üblicherweise gebräuchlichen Phenole wie beispielsweise p-tert.-Butylphenol, p-Isooctylphenol, p-Chlorphenol, 2,4,6-Tribromphenol und Phenol in den üblichen Mengen einsetzbar, die sich nach dem jeweils einzustellenden Molekulargewicht der Polycarbonat-Elastomeren bestimmt.

Als Segmente geeignete hydrierte Dimerfettsäureester sind aliphatisch hydroxylterminierte Polyester erhältlich aus hydrierter Dimerfettsäure mit einem Molekulargewicht (Zahlenmittel) $\bar{M}n$ von etwa 300 bis 800, vorzugsweise 500 bis 600, und einem Diol, wobei die hydroxylterminierten Polyester durch Überschuss an Diol gegenüber der hydrierten Dimerfettsäure in bekannter Weise erhältlich sind, beispielsweise in Gegenwart von Veresterungskatalysatoren und Temperaturen zwischen 150° und 200° und Reaktionszeiten zwischen 20 h und 50 h. Die geeigneten hydrierten Dimerfettsäureester haben mittlere Molekulargewichte (Zahlenmittel) $\bar{M}n$ von 800 bis 20 000, vorzugsweise von 1000 bis 15 000 und insbesondere von 2000 bis 10 000.

Durch das jeweilige Reaktantenverhältnis von Diol zu hydrierter Dimerfettsäure wird jeweils das gewünschte Molekulargewicht der hydrierten Dimerfettsäureester in bekannter Weise geregelt.

Unter hydrierter Dimerfettsäure versteht man das hydrierte Dimerisationsprodukt von ungesättigten Fettsäuren ($C_{18}$) wie Tallöl-, Linol- und Linolensäure. Die Herstellung und die Struktur der dimerisierten Fettsäure wird in J. Am. Chem. Soc. 66, 84 (1944) und in US-PS 2 347 562 beschrieben. Die bevorzugten handelsüblichen Dimerfettsäurezusammensetzungen sind praktisch frei von Monomer- und hohen Trimerfraktionen und vollständig gesättigt. Vorzugsweise geeignet ist eine hydrierte Dimerfettsäure, die z.B. durch Dimerisierung von Linolsäure oder Tallölfettsäure und anschliessender Hydrierung hergestellt wird. Es können für diesen Anwendungszweck auch Gemische aus Dimerfettsäuren und Trimerfettsäuren verwendet werden.

Als geeignete Diole kommen, gegebenenfalls, im Gemisch miteinander, beispielsweise Ethylenglykol, 1,2- und 1,3-Propylenglykol, 1,2- 2,3-, 1,3- und 1,4-Butandiol, Pentandiole, Neopentylglykol, Hexandiole z.B. 1,6-Hexandiol, Trimethylhexandiole, 1,8-Octandiole, Decandiole, Dodecandiole, Octadecandiole, 2,2-Dimethyl-1,3-propandiol-2,2-dimethyl-3-hydroxypropionat, Diethylenglykol, Triethylenglykol, Tetraethylenglykol, Dipropylenglykol, Tripropylenglykol, Tetra-

propylenglykol, 1,4-Cyclohexandimethanol, 1,1-Cyclohexan-dimethanol, Perhydrobisphenole z.B. 4,4'-(1-Methylethyliden)-bis-cyclohexanol und 2,2-Bis-(4-(2-hydroxyethoxy)-phenyl)-propan, in Frage.

Auch mehrwertige Alkohole können mitverwendet werden wie beispielsweise Glycerin, 1,2,4-Butantriol, Trimethylolethan, Trimethylolpropan, Trimethylolbutan, Pentaerythrit, Tetrosen, Di- und Trimethylolpropan, Pentosen, 2,2,6,6-Tetrakis-(hydroxymethyl)-cyclohexan, Hexosen, Dipentaerythrit und Tri-pentaerythrit. Ferner kommen Ethylenoxid- bzw. Propylenoxidaddukte an solche Polyole, sofern dabei eine mittlere Zahl von 60 Kohlenstoffatomen pro Molekül nicht überschritten wird, Polyethylenglykole, Polypropylenglykole und Polybutylenglykole in Frage.

Weitere Einzelheiten für die Herstellung der Komponente a) der erfindungsgemässen Mischungen können der oben genannten DE-OS 2 935 317 (Le A 19 828) entnommen werden.

Die Herstellung der erfindungsgemässen Mischungen aus den Komponenten a) und c) und gegebenenfalls b) erfolgt in üblicher Weise nach beliebigen Verfahren, beispielsweise durch Vermischen und Koextrusion der einzelnen Komponenten in Substanz, in Einwellen oder Zweiwellenextrudern bei Temperaturen zwischen vorzugsweise 250°C und 300°C, oder in speziellen Fällen über die Lösungen der entsprechenden Komponenten in inerten organischen Lösungsmitteln wie beispielsweise $CH_2Cl_2$ oder Chlorbenzol unter Mischen und anschliessendem Ausdampfen in Ausdampfextrudern.

Die erfindungsgemässen Mischungen haben ein überraschend gutes Eigenschaftsbild. Insbesondere haben sie eine reduzierte Spannungsrissbildungstendenz, insbesondere gegen Superbenzin, die noch mit einer verbesserten Tieftemperaturschlagzähigkeit (bis etwa −40°C) gekoppelt ist.

Somit werden die erfindungsgemässen Mischungen, die in üblicher Weise analog den bereits bekannten Zweiermischungen aus den Komponenten b) und c) zu Formkörpern, Folien etc. verarbeitet werden können, bevorzugt auf dem Automobilsektor eingesetzt, beispielsweise zur Herstellung von Profilteilen, Stossstangen, Karosserieteilen und ähnlichen Formteilen.

Die erfindungsgemässen Mischungen können in üblicher Weise mit Farbstoffen, Pigmenten, Stabilisatoren gegen Hitze und UV-Einwirkung, Füllstoffen, Glasfasern, Flammschutzmitteln und ähnlichem versetzt werden. Geeignete Zusatzstoffe dieser Art sind die für thermoplastische aromatische Polycarbonate geeigneten.

Ausgangsprodukte

1. Polycarbonat aus Bis-2-(4-hydroxyphenyl)-propan mit einem $\bar{M}w$ von 29 000 (ermittelt nach Streulichtmesung), $\bar{M}n$ von 14 500 (ermittelt durch Membranosmose), hergestellt in üblicher Weise mit einem Kettenabbrecher.

2. Polyethylen mit hoher Dichte, relativ niedrigem Molekulargewicht und enger Molekulargewichtsverteilung: Molekulargewicht $\bar{M}w$ (Lösungsviskosität) 52 000; Dichte: 0,962 g/cm³, Schmelzindex: MFI 190/5 = 20 g/10 Min.

3. Polycarbonat-Elastomer aus 55 Gew.-% eines hydrierten Dimerfettsäure-Hexandiol-Polyesters (Mn ca. 4000) und 45 Gew.-% Bisphenol-A-Polycarbonat.

3a) Hydrierter Dimerfettsäurepolyester mit aliphatischen OH-Endgruppen und einem berechneten Mol.-Gew. von ca. 4000.

4. 368 kg (7,8 Mol) hydrierte Dimerfettsäure, 1,074 kg (9,1 Mol) Hexandiol-1,6 und 0,85 kg Xylol werden vermischt und unter Stickstoff und Rühren langsam auf eine Rückflusstemperatur von 180°C erhitzt. Innerhalb 6 h kann die Hauptmenge an Kondensationswaser über einen Wasserabscheider abgetrennt werden. Nach Zugabe von 6,056 g $SnCl_2.2H_2O$ wird noch weiter 8 h am Rückfluss erhitzt, bis das Kondensationswasser völlig abgeschieden ist. Abschliessend wird unter vermindertem Druck das gesamte Xylol abdestilliert. Es wird ein Öl mit einer OH-Zahl von 30 (ber. 28.3) und einer Säurezahl von 1, entsprechend einem mittleren Mol-Gewicht von 3600 erhalten. Die Viskosität dieses Öls in 50 proz. Xylollösung beträgt 29 sec.

3b) Hydrierter Dimerfettsäurehexandiol-Polyester mit Diphenyl-carbonat-Endgrupen des 2,2-Bis-(4-hydroxyphenyl)-propans (Bisphenol A) und einem berechneten Mol-Gew. von ca. 4400.

4,61 kg (1,16 Mol) hydrierter Dimerfettsäurepolyester gemäss 3a), 0,497 kg (2,32 Mol) Diphenylcarbonat, und 0,530 kg (2,32 Mol) Bisphenol A werden in einem Autoklaven vorgelegt. Unter Stickstoffausgleich wird die Mischung bei 100°C aufgeschmolzen. In diese Schmelze werden 06 ml 40 proz. NaOH (≙ 35 ppm Na ber. auf die Einwaage) als Katalysator zugegeben. Innerhalb 1 h wird nun der Druck langsam auf 1–1,5 Torr gesenkt. Danach wird die Reaktionsmischung innerhalb 1 h auf 150°C Innentemperatur aufgeheizt, bis das entstehende Phenol abdestilliert. Die Reaktionsmischung wird weitere 2 h bei dieser Temperatur und 1–1,5 Torr so lange behandelt, bis die Hauptmenge an Phenol abgespalten ist.

Danach wird ein Vakuum von 0,5 Torr angelegt und weitere 2 h bei 150°C kondensiert. Nach Beendigung der Reaktion sind 421 g Phenol (96,3% der Theorie) abdestilliert.

Das erhaltene Öl hat eine OH-Zahl von 27 (ber. 25) und eine Säurezahl von 1, entsprechend einem mittleren Mol-Gew. von Mn = 4000. Die Viskosit dieses Öls in 50 proz. Xylollösung beträgt 182 sec.

3c) 2,794 kg des Vorproduktes 3b), gelöst in 30 l Methylenchlorid, werden zu einer Lösung von 1,532 kg (6,7 Mol) Bisphenol A, 41,85 g p-tert.-Butylphenol und 1,415 kg 45 proz. NaOH und 30 l dest. Wasser gegeben. Innerhalb 25 Min. werden bei 20–25° unter Rühren und Stickstoffatmosphäre 1,181 kg Phosgen eingeleitet, während der pH-Wert mit 2,22 kg 45 proz. NaOH konstant auf

pH 13 gehalten wird. Nach Zugabe von 8,05 g Triethylamin wird 1 h gerührt.

Die organische Phase wird abgetrennt, nacheinander mit 2 proz. Phosphorsäure und schliesslich mit dest. Wasser bis zur Elektrolytfreiheit gewaschen. Nach dem Abtrennen des Wassers wird die organische Lösung konzentriert. Die Isolierung des hochmolekularen, segmentierten Polycarbonat-Elastomers erfolgt durch Extrusion im Eindampfextruder bei etwa 230–240°C unter den für die Polycarbonatextrusion bekannten Bedingungen.

Die analytischen Kennzahlen des Polycarbonat-Elastomers sind: rel. Viskosität (0,5% in $CH_2Cl_2$) $\eta_{rel} = 1{,}49$.

Mn 10878
Mw 115034
U 9,57

Eine Differentialthermoanalyse dieses Produktes zeigt, dass sowohl beim ersten als auch beim zweiten Aufheizen eine Phasentrennung vom Dimerfettsäure-Hexandiol-Polyester-Weichsegment (Einfriertemperatur −50°C) und dem Hartsegment (Einfriertemp. ca. 135–140°C) vorliegt.

4. Polycarbonat-Elastomer aus 10 Gew.-% eines hydrierten Dimerfettsäurehexandiol-Polyesters (Mn ca. 4000) und 90 Gew.-% Bisphenol-A-Polycarbonat.

0,564 kg des Vorproduktes 3b gelöst in 36 l Methylenchlorid, werden zu einer Lösung aus 36 l dest. Wasser, 3,982 kg Bisphenol A, 79,7 g p. tert. Butylphenol und 3,146 kg 45 proz. Natronlauge gegeben. Innerhalb 45 Min. werden bei 20–25°C unter Rühren und Stickstoffatmosphäre 2,625 kg Phosgen eingeleitet, während der pH-Wert mit 3,7 kg 45 proz. Natronlauge auf pH 13 gehalten wird.

Nach Zugabe von 24,3 ml N-Ethylpiperidin wird noch 1 Stunde gerührt.

Die organische Phase wird abgetrennt, nacheinander mit 2 proz. Phosphorsäure und schliesslich mit dest. Wasser bis zur Elektrolytfreiheit gewaschen.

Nach dem Abtrennen des Wassers wird die organische Lösung konzentriert. Die Isolierung des hochmolekularen, segmentierten Polycarbonat-Elastomers erfolgt durch Extrusion im Eindampfextruder bei etwa 270–280°C unter den für die Polycarbonatextrusion bekannten Bedingungen.

Die relative Viskosität des Polycarbonats beträgt $\eta_{rel} = 1{,}30$ (gemessen in 0,5% $CH_2Cl_2$ bei 20°C).

5. Polyethylen hoher Dichte und einem Molekulargewicht, das wesentlich über dem der üblichen Polyethylentypen liegt.
Dichte: 0,949–0,953 g/cm³
Schmelzindex MFI 190/21,6 = 1,7–2,3 g/10 Min.

6. Polyethylencopolymerisat aus Ethylen, Acrylsäure und Acrylsäurebutylester mit einer Dichte von 0,924–0,930 g/cm³ und einem Schmelzindex MFI 190/2,16 = 6–8 g/10 Min.

Beispiele
Benzintest:

1. Spannungsrisskorrosionstest (SRK-Test)

Normkleinstäbe werden in der Weise über eine Radiusschablone gespannt, dass die Randfaserdehnung R 0,6% beträgt. Die so unter Spannung gesetzten Prüfstäbe werden 5 Minuten in eine Testflüssigkeit (Superbenzin-Simulanz), bestehend aus einem Gemisch aus 50% Isooctan und 50% Toluol, getaucht. Dabei wird registriert, ob bzw. nach welcher Zeit die Prüfkörper auf der Schablone brechen.

2. Tauchtest

Die Prüfkörper werden 5 Minuten ohne zusätzliche Belastung in eine Testflüssigkeit aus einem Gemisch aus 50% Isooctan und 50% Toluol getaucht. Nach 24stündiger Lagerung wird geprüft, ob sich die Formkörper verfärbt haben oder nicht.

Die in den Beispielen genannten Einstellungen waren zur besseren Erkennung von Verfärbungen dunkelgrau eingefärbt (Pigmentgehalt ca. 1%).

Prüfung auf Tieftemperatur-Schlagzähigkeit (bei −40°C)

Die Prüfungen erfolgen nach

1. DIN 53 453 entsprechend ISO/R 179
(Prüfkörper: Normkleinstab)
und/oder
2. ASTM 256-56 entsprechend ISO/R 180
(Izod-Kerbschlagzähigkeit)
(Prüfkörper 63,5×12,7×3,2 mm)

Vergleichsversuch 1

Ein Polycarbonat-Standardspritzgiess-Typ (Ausgangsprodukt 1) mit einem Molekulargewicht von ca. $\bar{M}w$ 29 000 zeigt in dem genannten Test folgendes Verhalten:

$a_n$ bei −40°C
nach DIN: 6 kJ/m²
nach Izod: 110 J/m

SRK-Test: Bruch nach 40–60 Sekunden
Tauchtest: keine Verfärbung

Vergleichsversuch 2

Eine Mischung aus 98 Gew.-% eines Polycarbonates aus Bis-2-(4-hydroxyphenyl)-propan und 2 Gew.-% eines Polyethylens (Ausgangsprodukt 2)

$a_n$ bei −40°C

nach DIN: 6 kJ/m²
nach Izod: 150 J/m

SRK-Test: Bruch nach 2 Minuten
Tauchtest: keine Verfärbung

Vergleichsversuch 3

83% eines Polycarbonates aus Bis-2-(4-hydroxyphenyl)-propan (Ausgangsprodukt 1) wurden mit 17% eines Copolycarbonates mit 55 Gew.-% Dimerfettsäure-Hexandiol-Polyester (Ausgangsprodukt 3) gemischt.

$a_n$ bei −40°C
nach DIN: 20 kJ/m²
nach Izod: 1000 J/m

SRK-Test: kein Bruch
Tauchtest: starke Weissverfärbung

Vergleichsversuch 4

Ein Polycarbonat-Compound nach Vergleichsversuch 3 wird mit 5% eines Polyethylenhomopolymeren (Ausgangsprodukt 5) gemischt.

$a_n$ bei −40°C

nach DIN: 9 kJ/m²
nach Izod: 143 J/m

SRK-Test: kein Bruch
Tauchtest: sehr wenig Verfärbung

Beispiel

Eine Mischung aus einem hochmolekularen segmentierten Polycarbonat entsprechend Ausgangsprodukt 4, mit nur 10 Gew.-% Dimerfettsäure-Hexandiol-Polyester (MG ca. 4000) und 5% eines Polyethylencopolymeren aus Ethylen, Acrylsäure und Acrylsäureester (Ausgangsprodukt 6) hat folgende Eigenschaften:

$a_n$ bei −40°C
nach DIN: 10 kJ/m²
nach Izod: 130 J/m

SRK-Test: kein Bruch
Tauchtest: keine Verfärbung

**Patentansprüche**

1. Mischungen aus

a) hochmolekularen, segmentierten, thermoplastisch verarbeitbaren aromatischen Polycarbonaten mit 5 bis 70 Gew.-% einkondensierten hydrierten Dimerfettsäureestern, und gegebenenfalls

b) anderen hochmolekularen, aromatischen, thermoplastischen Polycarbonaten, dadurch gekennzeichnet, dass sie

c) thermoplastische Polyolefine enthalten,

wobei die Summe der Komponenten a) + b) von 98 Gew.-% bis 90 Gew.-% und die Komponente c) von 2 Gew.-% bis 10 Gew.-%, bezogen jeweils auf gesamte Gewichtsmenge aus a) + b) + c) liegen und wobei die Gewichtsmenge an einkondensiertem, hydriertem Dimerfettsäureester von 3 bis 30 Gew.-%, bezogen auf Gewichtsmenge aus a) + b), beträgt.

2. Mischungen gemäss Anspruch 1, dadurch gekennzeichnet, dass die hochmolekularen, segmentierten, thermoplastisch verarbeitbaren aromatischen Polycarbonate mit einkondensierten hydrierten Dimerfettsäureestern durch Umsetzung von Dimerfettsäureestern mit Hydroxyarylcarbonatendgruppen der Formel (II)

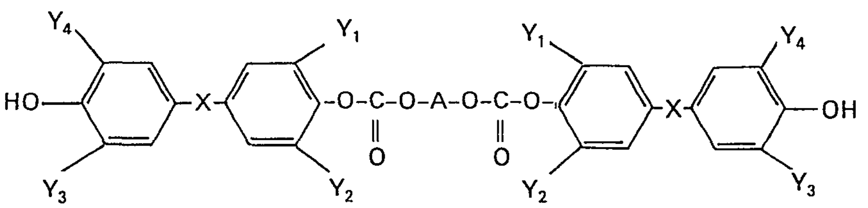

(II)

worin

-O-A-O- der bivalente Diolat-Rest von aliphatisch Hydroxyl-terminierten hydrierten Dimerfettsäureestern mit $\bar{M}n$ (Zahlenmittel des Molekulargewichts) von 800 bis 20 000, vorzugsweise von 1000 bis 15 000 und insbesondere von 2000 bis 10 000 ist,

X eine Einfachbindung, $-CH_2-$,

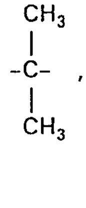 , 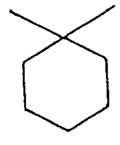 , -O-, -S-, $-SO_2-$,

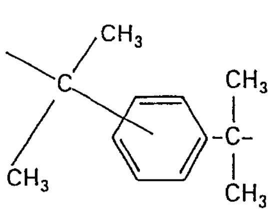

ist und

$Y_1$ bis $Y_4$ gleich oder verschieden sind, und Wasserstoff, $C_1$–$C_4$-Alkyl, vorzugsweise Methyl oder Halogen, vorzugsweise Chlor oder Brom, bedeuten,

mit anderen Diphenolen, Kettenabbrechern und Kohlensäurehalogeniden und gegebenenfalls Verzweigern nach dem bekannten Verfahren der Phasengrenzflächenpolykondensation erhältlich sind.

**Claims**

1. Mixtures of

a) high molecular weight, segmented, thermoplastically processible aromatic polycarbonates containing 5 to 70% by weight of hydrogenated dimeric fatty acid esters incorporated by condensation, and optionally

b) other high molecular weight, aromatic, thermoplastic polycarbonates, characterised in that they contain

c) thermoplastic polyolefins,

the sum of components a) + b) being from 98% by weight to 90% by weight and component c) being from 2% by weight to 10% by weight, based in each case on the total amount by weight of a) + b) + c), the amount by weight of hydrogenated dimeric fatty acid ester incorporated by condensation being from 3 to 30% by weight, based on the amount by weight of a) + b).

2. Mixtures according to Claim 1, characterised in that the high molecular weight, segmented, thermoplastically processible aromatic polycarbonates containing hydrogenated dimeric fatty acid esters incorporated by condensation are obtainable by reacting dimeric fatty acid esters containing terminal hydroxyarylcarbonate groups of the formula (II)

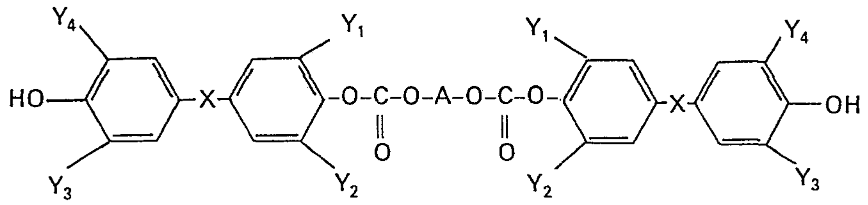

(II)

wherein
-O-A-O- is the bivalent diolate radical of aliphatically hydroxyl-terminated hydrogenated dimeric fatty acid esters having $\bar{M}n$ (number average of the molecular weight) of 800 to 20,000, preferably 1,000 to 15,000 and in particular 2,000 to 10,000,
X is a single bond,

$-CH_2-$, 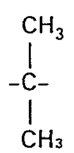 , 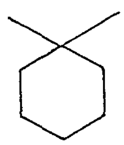 , -O-, -S-,

$-SO_2-$, 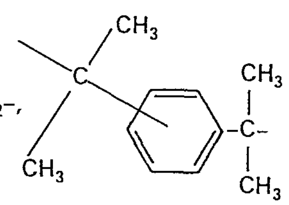

and
$Y_1$ to $Y_4$ are identical or different and denote hydrogen, $C_1$-$C_4$alkyl, preferably methyl or halogen, preferably chlorine or bromine,
with other diphenols, chain stoppers and carbonic acid halides and, if appropriate, branching agents, by the known phase boundary polycondensation process.

**Revendications**

1. Mélanges de

a) des polycarbonates aromatiques à haut poids moléculaire, segmentés, aptes au travail thermoplastique, contenant à l'état condensé de 5 à 70% en poids d'esters d'acides gras dimères hydrogénés, et le cas échéant
b) d'autres polycarbonates aromatiques thermoplastiques à haut poids moléculaire, caractérisés en ce qu'ils contiennent
c) des polyoléfines thermoplastiques,

la somme des composants a) + b) représentant de 98% en poids à 90% en poids et le composant c) représentant de 2 à 10% en poids, dans les deux cas par rapport au poids total de a) + b) + c), et la proportion en poids d'esters d'acides gras dimères hydrogénés condensés représentant de 3 à 30% en poids par rapport au poids total de a) + b).

2. Mélanges selon la revendication 1, caractérisés en ce que les polycarbonates aromatiques à haut poids moléculaire, segmentés, aptes au travail thermoplastique contenant à l'état condensé des esters d'acides gras dimères hydrogénés sont obtenus par réaction d'esters d'acides gras dimères portant des groupes therminaux carbonate d'hydroxyaryle de formule II

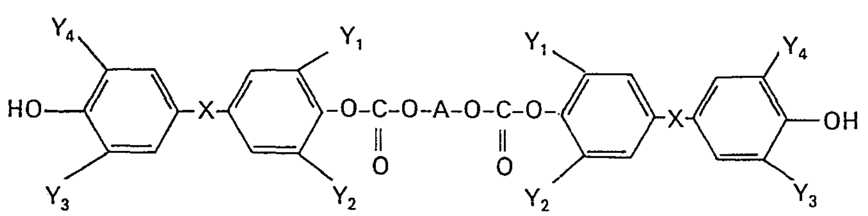

(II)

dans laquelle
-O-A-O- représente le reste diolate bivalent d'esters d'acides gras dimères hydrogénés à groupes terminaux hydroxy aliphatiques ayant un poids moléculaire $\bar{M}n$ (moyenne en nombre du poids moléculaire) de 800 à 20 000, de préférence de 1000 à 15 000 et plus spécialement de 2000 à 10 000,

X représente une liaison simple

$-CH_2-$ , 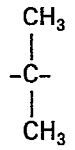 , 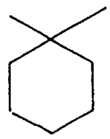 , $-O-$, $-S-$, $-SO_2-$, 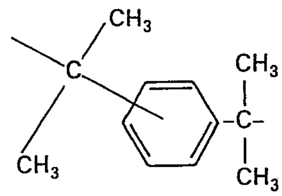 ,

et

$Y_1$ à $Y_4$, ayant des significations identiques ou différentes, représentent l'hydrogène, les groupes alkyle en $C_1$–$C_4$, de préférence méthyle ou des halogènes, de préférence le chlore ou le brome, avec d'autres diphénols, des coupeurs de chaînes et des halogénures de l'acide carbonique et le cas échéant des agents ramifiants par le procédé connu des polycondensation à l'interface de phases.